# EUROPEAN PATENT APPLICATION

(11) **EP 1 111 518 A1**
(43) Date of publication of application: **27.06.2001**
(21) Application number: 00311289.3
(22) Date of filing: 15.12.2000
(51) Int. Cl.: G06F 17/30

(54) **System and method for document notification and delivery across heterogeneous document repositories**

(30) Priority: 22.12.1999 US 470127
(71) Applicant: Xerox Corporation, Rochester, New York 14644 (US)
(72) Inventor: Arregui, Damian, 38000 Grenoble (FR); Pacull, Francois, 38920 Crolles (FR); Willamowski, Jutta, 38100 Grenoble (FR)
(74) Representative: Skone James, Robert Edmund

(57) **Abstract**

A system (10) and method provides a means for multiple users (50) in a distributed network to receive notification and delivery, if desired, of new documents (21) of interest from heterogeneous repositories (12). The system includes a plurality of document repositories (12), which may be distributed across a network, such as an intranet or the Internet. Some, or all, of the documents (21) in each repository (12) are indexed or associated according to a set of predetermined subjects (23). These subjects (23) are those which are of interest to particular groups of users or user accounts. Users (50), through user accounts, establish a preference for receiving information about certain subjects. A controller (40) monitors the documents in the plurality of repositories according the predetermined subjects and user account preferences. When the system determines a new document is of interest to a user account based on its subject matching a user account preference, it notifies the user account.

## Description

This invention relates to systems and methods for information notification and more particularly, to a system and method for notifying users of information located in heterogeneous repositories across a distributed network.

Within most organizations, people are distributed over a network. Even if people do not work closely together, they often work on common subjects. Since people do not always know each other, it becomes difficult to inform all interested people whenever new relevant findings are published around a particular topic. A classic approach to this problem is to store all documents related to a topic in a dedicated document repository, e.g., a file system directory, or a collection within a document management system. This approach requires that all interested persons have access to the dedicated repository and regularly check it for new documents. Requiring users to self-check does not guarantee they will be aware of important documents.

Many commercial services provide notification of items of interest to customers via e-mail. For example, airlines, online merchants and news groups provide wish list notification services and newsletter distribution. Each such service requires separate registration and often the user must go to the particular web site to obtain the document or further information about the item of interest.

In a large organization, different people use different tools to manage knowledge, data and documents. Different people may also have interest in documents on a variety of different document repositories, requiring them not only to check the multiple repositories, but also to be faced with translating or reformatting selected documents. The diversity of storage tools used and the number of different type documents produced together with the access constraints tied to any heterogeneous large-scale distributed environment turns awareness and delivery of new documents into a real challenge.

A system for notification of documents according to the invention includes a plurality of document repositories, a subject directory, a profile directory and a controller. Each document repository stores and monitors a plurality of documents. The subject directory represents at least one subject (but will typically include numerous subjects), where documents stored in the plurality of document repositories are associated to the subjects in the subject directory. The profile directory represents a plurality of user accounts, where each user account subscribes to at least one subject. The controller manages the plurality of document repositories, such that when a new document is stored in one of the plurality of repositories and being associated with at least one subject in the subject directory, notifies the user accounts having subscribed to that subject of the new document. The controller functionality may be split among two managers: a configuration manager which manages optional document delivery devices and the document repositories and a coordinator which performs the notification and optional delivery functions.

The system and method of the invention provides a means for multiple users in a distributed network to receive notification and delivery, if desired, of new documents of interest. The system includes a plurality of document repositories, which may be distributed across a network, such as an intranet or the Internet. Some, or all, of the documents in each repository are indexed according to (or associated with) a set of predetermined subjects. Basically, a subject is defined by properties of the documents such as their location, their attributes (e.g., authors, keywords, etc.) or characteristic (e.g., size).

These subjects are those which are of interest to particular groups of users or user accounts. Users, through user accounts establish a preference for receiving information about certain subjects. Each repository monitors the documents according to the predetermined subjects and user account preferences. This can be accomplished directly, by having each document repository access the subject directory and profile directory. Alternatively, the document repositories can be monitored by the system controller. In fact, each repository has a mission: to find those documents which can be associated with one or more of the predetermined subjects. A subject is thus a collection of documents in the repository. The controller just picks the document that is considered valuable by the repository. When the repository determines that a new document is of interest to a user account based on the document's subject matching a user account preference, the system controller (by the means of the coordinator) notifies the user account of the availability of the document.

The user account can subscribe to notification of one or more subjects of interest. The user account can also subscribe to receive the new documents as part of the notification procedure, or on a follow up basis. Since not all user accounts may have access rights to documents on particular repositories, the system controller can filter the new documents according to access rights of the user account.

A method according to the invention includes associating documents in repositories to subjects and allowing users to subscribe to these subjects, monitoring the repositories for new documents, notifying the subscribed users about new documents, and if desired or subscribed for this added functionality, delivering the documents to the users on their request.

The system and method of the invention provide awareness of new documents through a subscription/notification technology, automatic notification to all interested people/users/user accounts about these documents, and on demand delivery of these documents to users. The system and method of the invention maximize, as much as possible, use of the existing infrastructure available within the organization.

The invention provides notice or awareness of documents/information through association of document repositories to subjects. Subjects are defined and associated to an arbitrary set of document repositories in which related documents are stored. Storing a document in a document repository becomes equivalent to publishing a document with respect to the subject(s) to which that repository is associated. As a result of this association or indexing, by monitoring the repositories and detecting new documents relating to the set of predefined subjects provides immediate awareness about these new documents to the subscribed user accounts.

The invention proactively provides awareness through push technology. Other than the initial subscription to a subject by a user in his/her user account, no other explicit action is required of the user. The user account can specify that new documents be provided to it in a number of manners. The user account can receive notification (and delivery) to an e-mail account. The user account can receive the document through different delivery devices: e-mail, a printer or stored on a user-specified directory on the system or at some other user-specified location.

Any user can access his/her personalized Web page, including defining his/her style, layout and user preferences. The user can also specify that new documents (or notification of the new documents) are sent directly to the user-specified web page. Thus, the Web page will be automatically and regularly updated by the system. Additionally, the user can query "what's new?" within the subjects directly from the web page.

In its simplest implementation, storing a document in a repository of the system can be considered a metaphor for publishing the document for a set of interested people. The system and method of the invention first defines subjects and associates document repositories to these subjects. All documents relevant for a subject are later stored in one of these repositories. Once subjects are defined, users can subscribe to these subjects. Then, whenever a new document for a subject is published, the system looks up the subscribed users, notifies them and delivers the document to them if they require it (or if their subscription service includes delivery).

The system and method of the invention may provide further extensions or embodiments or applications to the basic scheme. User profiles may be defined allowing users to define their preferences concerning the notification and delivery time and medium. Filtering Criteria can be established to allow users to select more specifically relevant documents. Automatic Document Transformation provides adaptation or transformation of the documents to a selected delivery medium. Access Rights provide the document owners the ability to limit access to particular documents to different users.

An example of a system and method according to the present invention will now be described with reference to the accompanying drawings, in which:-
Figure 1 is a block diagram of a system for document notification and delivery across heterogeneous document repositories according to the invention;
Figure 2 is a schematic diagram of an organizational implementation of the invention;
Figure 3 is a diagram of the CLF interaction model; and
Figure 4 is a diagram of how Yaka is implemented using CLF objects.

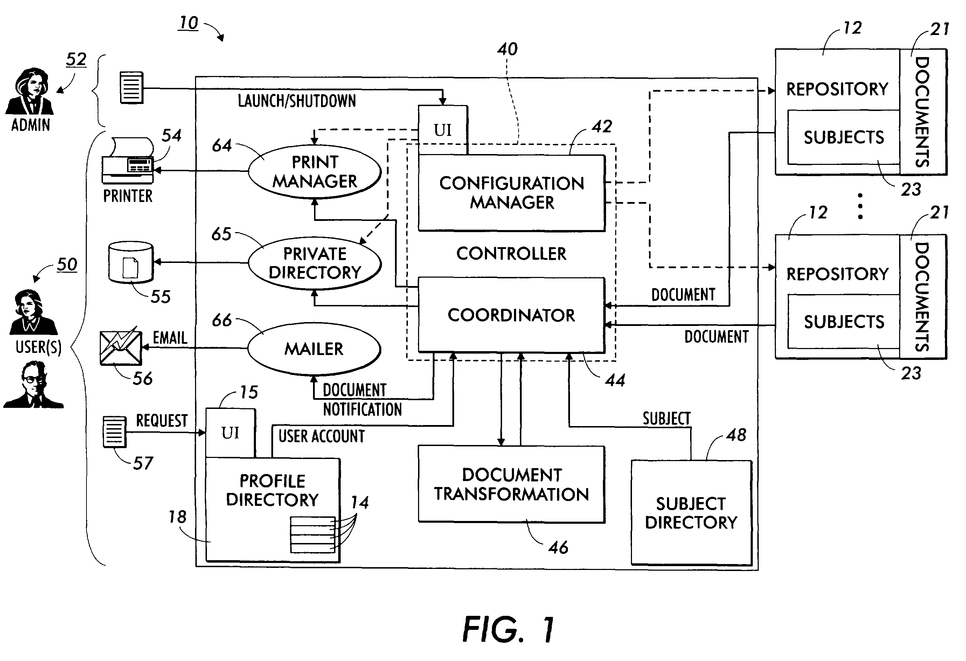

Referring now to the drawings, and especially to Figure 1, a system for document notification and delivery across heterogeneous document repositories embodying the present invention is generally shown therein and identified by reference numeral 10. System 10 includes controller 40, which may be preferably split into a configuration manager 42 and a coordinator 44, subject directory 48, profile directory 18, and a plurality of document repositories 12. Configuration manager 42 is responsible for management of the document repositories 12 and the delivery media (shown here as print manager 64, private directory 65 and mailer 66). The subject directory 48 maps the subjects and repositories 12 (or rather, maps the documents in each repository 12 to one or more subjects in the subject list). Profile directory 18 manages the user preferences, which are established when users establish user accounts 14. User preferences define the user preferences for subjects and document delivery methods. Coordinator 44 receives documents from repositories 12 and sends notifications and delivers documents to the delivery media. Optional document transformation 46 may also be provided in order to transform documents to a desired format prior to delivery to a user 50.

Each repository 12 includes various documents 21, for example, which are stored therein. Repository 12 may also include some filtering facilities in order to increase the relevance of the document. The documents 21 are shown referenced or indexed to predetermined subjects, 23. When a document 21 matches a subject 23, it means the document is of relevance to that subject. For example, an article on Multiparty Negotiation for Dynamic Distributed Object Services might be referenced under the broad subject distributed object platform.

Users 50 subscribe to the system 10 by registering a user account 14 to the profile directory 18. User 50 submits a request 57 for a user account 14 through user interface 15, which stores the user profile 14 in user profile directory 18. Each user account lists the various subject the user is interested in receiving notification (and delivery) of documents received in any of the associated repositories 12 of system 10. Profile directory 18 stores the various user account subscription profiles, which include a list of subjects 23 of interest to the particular user. The subject subscriptions and corresponding profiles stored in profile directory 18 may be updated from time to time as particular users add, remove, or modify them and as user accounts or subjects are added or removed from the system 10.

Coordinator 44 employs various scripts or rules that implement the features of the system. When the coordinator determines through the corresponding script that there is a document of interest to a particular user account (by comparing the document's subject to the users' subscriptions), the system 10 sends a notification to that user account by the means of scripts also enacted by the coordinator 44. For example, if notification is specified to be by email, coordinator 44 sends a notification to mailer device 66 which sends an email message to user 50. If the user account 14 includes document delivery, the document may also be sent at the same time or some later time according to the users profile for the given subject 23.

Preferably, the system 10 is implemented in a distributed hardware and software embodiment. The source information is distributed, the control is distributed, the users and the devices are distributed. One such distributed embodiment has been implemented as a set of software components that cooperate to provide the system 10 and is known by the name Yaka. Yaka defines subjects 23 (or the subjects can be defined by users 50 on a distributed network) and allows users 50 to subscribe to receive notification of documents pertaining to these subjects. Then, whenever a new document for a subject is published (i.e., a document is stored or otherwise made available on a repository 12), Yaka looks up the subscribed users, notifies them and delivers the document to them if they require it, according to their personal profiles.

To deploy Yaka, first subjects 23 are defined, then document repositories 12 are associated with or indexed using these subjects. These two actions can either be done by an administrator 52 for a group of individuals 50 or by each individual Yaka user 50, or by a combination of both. All documents relevant for a subject 23 may be stored in one of these repositories 12 or they may remain in their originating repository, with a pointer or an index listing each document's relevant subjects. Document repositories 12 can be either file system directories or DocuShare collections or any database located on an intranet or a distributed network of heterogeneous repositories across the Internet. Since Yaka integrates different storage tools in a homogeneous way, other storage tools, such as databases, Web or WebDav servers, can be easily integrated.

Once the subjects 23 have been defined, users 50 may then subscribe to these subjects 23. For each subject each subscribing user specifies his profile (i.e., preferences) concerning the way he/she wants to be notified when new documents appear, and the delivery medium for receiving these documents. For example, the user 50 can choose between Email 56, Fax, Printer 54, or a copy to a local, personal document repository 55. Since Yaka integrates different delivery media in a homogeneous way, other delivery media, such as Palm Pilots or cellular phones, can also be selected and integrated into the system.

Yaka provides at present two main notification and delivery schemes for new documents, between which the users 50 can select. The first is interactive notification and delivery. Each time a new document is published within a subject, the subscribed user will receive a notification by Email (or the user's preferred method of notification) along with meta-information such as summary, keywords, size, and authors. From the information contained within the Email the user then indicates if he/she is interested in receiving a copy of the document, and in that case through which delivery medium Yaka should provide it to him/her. The second method is direct delivery. Each time a new document is published within a subject, the subscribed user receives it through the delivery medium he pre-selected in his preferences for the subject.

The system and method of the invention also enable the user to directly access the complete list of published documents for the subjects and request their delivery. The user may also select notification and delivery to extend the awareness scheme to a user-specified "dynamic web page" that is regularly updated by Yaka.

System 10 (i.e., Yaka) uses existing infrastructure within the organization as much as possible. For example, Yaka can access databases or LDAP repositories for automatically extracting user information such as Email addresses, domain etc. Yaka can also interface with the existing organization infrastructure to access Email services, existing printers and heterogeneous document repositories.

### EXAMPLE

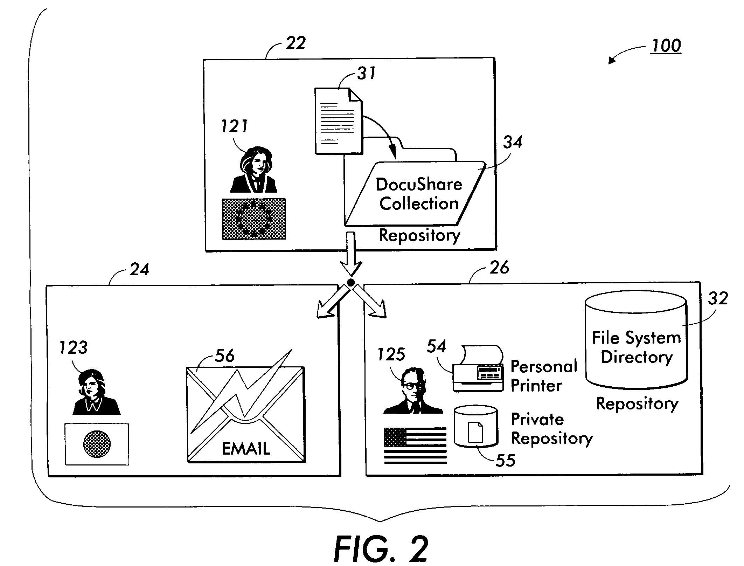

Suppose within a particular organization the subject of Software Improvement is of general interest. Referring to Figure 2, organization 100 is distributed over three sites, located in Europe 22, in the USA 26, and in Japan 24. Users 21, 23, 25 from all three sites are interested in the subject Software Improvement. Yaka is deployed within this geographically distributed organization 100. First, the subject Software Improvement is defined. Two repositories, a DocuShare 34 collection at the European site and a file system directory 32 at the American site are associated to the subject Software Improvement. Each of the three sites will produce documents relevant to this subject and publish them through the defined repositories 32, 34 (although Japan does not have a repository, so presumably either no documents are published or stored there or any documents produced are stored at one of the other two repositories).

Different users at each location establish user accounts in order to subscribe to this subject. Suppose user 23 in Japan and user 25 in the USA establish user accounts to receive notification and delivery of documents in the system pertaining to the subject Software Improvement. When each user 23, 25 subscribes, each defines his personal preferences concerning document notification and delivery. The first user 23 is generally interested in all documents published for this subject. Thus he selects the direct delivery scheme to receive all new documents directly by Email. The second user 25 wants to keep control on the documents delivered to him. Thus he selects the interactive notification and delivery scheme, specifying a personal printer and a private document repository in addition to his Email as possible delivery media.

Next suppose user 21 in Europe stores a document 31 in the DocuShare collection 34 dedicated to the subject Software Improvement; in other words, user 21 she publishes the document 31. The Yaka configuration manager monitors this activity and detects new document 31 on the system pertaining to the subject Software Improvement. The Yaka system then determines that users 23 and 25 subscribed to this subject and wish to receive notification of document 31. The Yaka coordinator 42 sends the new document 31 directly by Email to the first user 23, and notifies the second user 25 by Email, containing information about the document, proposing to him either to have the document delivered by Email 56, copied in his personal repository 55 or printed on his personal printer 54.

The Yaka implementation of the system and method for document notification and delivery across heterogeneous document repositories uses a software middleware tool, the Coordination Language Facility (CLF), developed at the Xerox Research Center Europe. To understand how Yaka operates on top of CLF, an explanation of the features of CLF is provided. CLF is used to achieve homogeneity concerning the integration of storage media and delivery tools and in a more general way the communication among the components and their coordination by the means of scripts. The Coordination Language Facility - CLF

The CLF is a middleware tool aimed to coordinate distributed active software components over a Wide Area Network (typically the Internet). CLF includes two major parts: the underlying object model and the coordination scripting facility. For further details on CLF, please see J-M. Andreoli, D. Pagani, F. Pacull, and R. Pareschi. "Multiparty Negotiation for Dynamic Distributed Object Services." Journal of Science of Computer Programming, 31 1998: 179-203.

### The CLF Object Model

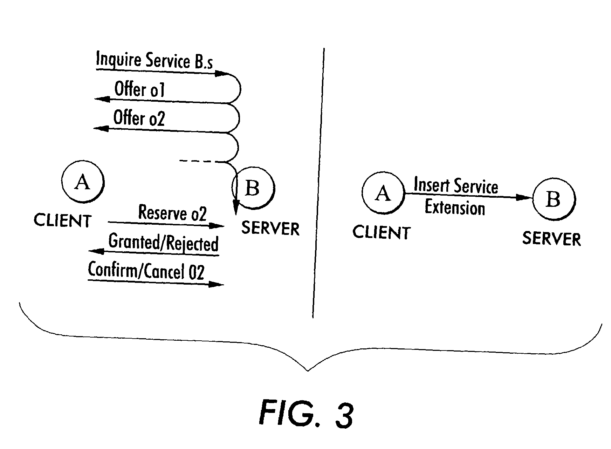

The CLF object model enriches other common models of software objects by viewing objects as resource managers, thus separating the internal object state (the resources themselves) from their management state. Primitives to interact with objects are introduced to (i) inquire and negotiate object capabilities in terms of resource availability, (ii) perform basic transaction operations over the resources of several objects (two-phase commit), and (iii) request new resources to be inserted. This enriched interaction model as shown in Figure 3 is characterized by a set of eight interaction verbs together with a protocol describing the correct sequences of invocations of these verbs, and their intended meaning in terms of resource manipulations. The interface of a CLF object distinguishes between "CLF services," accessed through the CLF interaction protocol, and "regular methods," accessed through a traditional request/answer protocol of type RPC - remote procedure call).

### The CLF Coordination Scripting Facility

The CLF coordination scripting facility takes full advantage of the object model. It allows high-level declarative specifications of coordinated invocations of CLF object services. A coordination is viewed here as a complex block of interrelated manipulations (removal, insertion, etc.) of the resources held by a set of objects (called the *participants* of the coordination) . CLF scripts describe, using rules, the expected global behavior of such blocks in terms of resulting resource transformations, but abstracts away the detailed sequencing of invocations of the CLF interaction verbs required to achieve such a behavior. It is this abstraction feature which considerably simplifies the design and verification of coordination scripts and makes them highly platform independent and hence, portable and very compact and readable, and hence easy to maintain. And it is one of the main advantage of, and motivation for, the use of rules in the context of CLF. Of course, if for a specific coordination purpose, rules are not judged appropriate, nothing prevents programmers from writing ad-hoc coordination programs directly, e.g., in Python or Java, using the CLF interaction primitives. In a CLF application, coordination scripts are enacted by CLF objects called "coordinators." As all CLF objects, coordinators manage resources, accessible through CLF services; these resources are the CLF coordination scripts and the rules of which they are composed. When a script is inserted in a coordinator, it is immediately interpreted. Being CLF objects, coordinators can participate (i.e., occur as participants) in higher level coordination, thus offering a reflexive model of coordination.

A CLF rule has the form: 'S(**X**) @ P(X**,Y**) @ Q(Y**,Z**) <>- R(X,Z)

The tokens S,P,Q,R refer to CLF services declared in the interface of some CLF objects (found in and described in some system name service - which in itself can be implemented as a CLF object).

For each token, the parameters appear between parentheses. The output parameters are shown in **bold**. If such a rule is inserted (as a resource) in a coordinator, it is executed as follows:
1. The first token S(X) finds some resource satisfying property S. The parameter X is instantiated accordingly using a value returned from the service that corresponds to S.
2. The second and third token find respectively, a resource satisfying the property P(X,Y) and a resource satisfying the property Q(Y,Z) for consistent values of X,Y,Z.
3. For each tuple of consistent values X,Y,Z, the rule triggers and transactionally extracts the resource satisfying P and the resource satisfying Q. The back-quote (') before the S prevents the resource satisfying the S(**X**) from being extracted.
4. A resource satisfying R(X,Z) is finally inserted.

Overall, the coordinator proactively tries to find consistent values for X,Y,Z that satisfy the properties S,P,Q. For each tuple of consistent values, it transactionally consumes the corresponding resources and inserts the resource expressed on the righthand side of the rule. The back-quote notation is a shorthand notation for reinsertion of a resource appearing in the left-hand side of a rule. Yaka Implementation

Objects. Yaka integrates two groups of objects. The first group of objects encapsulates the existing infrastructure. More precisely, available storage units (different databases and document repositories), and available delivery media (printers, mailer, etc.). The second group of objects manages Yaka-specific information. More precisely, the definition of subjects or more generally subscription criteria (Subject Directory), user subscription to subjects, and the corresponding preferences concerning new document notification and delivery (Profile Directory), and information about the available infrastructure (public and private storage units and delivery media) within the organization (Configuration Manager/Coordinator).

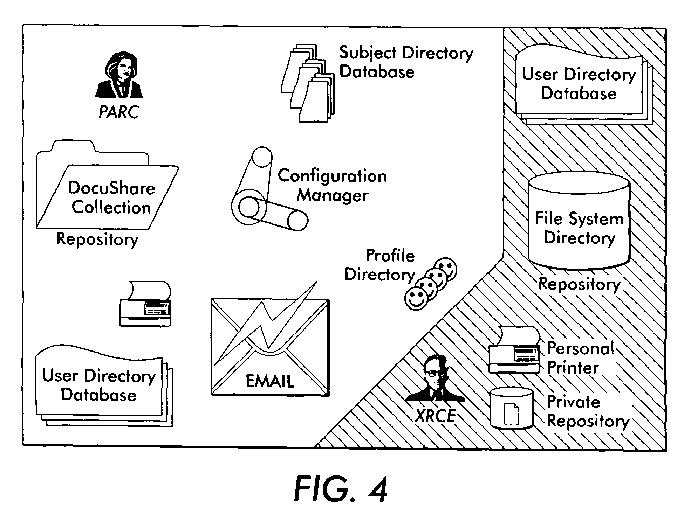

Figure 4 shows these objects defined for a sample application of Yaka. Yaka integrates the available infrastructure in a seamless way. Each type of object (databases, document repositories, and delivery media) is encapsulated to provide a homogeneous interface which allows to interact with the corresponding objects in a seamless way. This allows for easy integration of new objects.

Each object registers itself within a Yellow Pages or directory service which allows identification of all objects of a given type and calling a given service for all corresponding objects.

Document repositories provide in general the following two services. repositoryDocument(docId, docTitle, docContent) permits identification of any document contained in the repository and retrieval of the document title and content. repositoryDocumentStatus(docId, status) allows identification of the status of the document, i.e., to verify if the document is new or old, that is if it already existed when the document repository was last checked for new documents.

The Subject Directory provides a lookup service for all repositories registered for a given subject, and then uses this service to identify all new documents for the subject.

Delivery media provide in general a service of the following form:
deliverDocument(docTitle, docContent, deliveryParameter) takes as input the document title, the document content and a list of delivery parameters. These parameters depend on the delivery medium, e.g., the Email Address of the receiver for delivery by Email, the repository identifier for delivery by copy in a personal repository, the printer identifier for delivery by printing etc. The value for this parameter is usually filled from the user preferences, information provided by the Profile Directory.

### Notification and delivery mode

Two scripts achieve the main functionality provided by Yaka: notification and delivery.

Notification. A first rule manages the interactive notification and delivery scheme, a second one manages the direct delivery scheme. In both cases the first five tokens of the rule are identical. These first five tokens allow lookup of all subjects, all registered repositories for each subject, all new documents published in these repositories, the subscribed users for the subject, and the notification and delivery scheme each user has selected. The first rule then constructs and sends a notification Email, while the second one directly initiates document delivery. The two rules are described below and in Table 1, which describes the meaning of the individual tokens. The output parameters of the tokens are shown in **bold.**

Rule implementing the interactive notification and delivery scheme:
subject(**subjectId,subjectParameters**) @
repository(subjectld,**repositoryld**) @
repositoryId.repositoryDocumentStatus(**docId**, "new") @
subscribed(userld,subjectld) @
notificationScheme(userId,subjectId, "interactive choice") @
userEmail(**userId,eMailAddress**) @
repositoryId.repositoryDocumentTitle(docld, **docTitle**) @
buildMsg(docId,docTitle,repositoryId,userId,subjectId,subjectName,**subject,msg**)
<>-email("yaka@xrce.xerox.com", eMailAddress,subject,msg)

Rule implementing the direct delivery scheme:
subject(**subjectId, subjectParameters**) @
repository(subjectId, **repositoryId**) @
repositoryld.repositoryDocumentStatus(**docId**, "new") @
subscribed(**userId**, subjectId) @
notificationScheme(userId,subjectId, "**<deliveryMedium>**") @
<>-delivery(repositoryId,docId, userId, "<deliveryMedium>")
Delivery. A single rule allows execution of the delivery requested either through the direct or through the interactive notification and delivery scheme. The first token represents the requested document delivery. The second token looks up the user preferences for the requesting user and the specified delivery medium. The token on the right hand side executes the delivery with the given parameters.
delivery(**repositoryId,docId, userId, "<deliveryMedium>"**)
repositoryId.repositoryDocument (docId, **docTitle, docContent**) @
userPreferences(userId,"<deliveryMedium>", **deliveryParameters**) @
<>-<deliveryMedium>.deliverDocument(docTitle, docContent,**deliveryParameters)**

**Table 1**

| **Token** | **Signification** |
|---|---|
| subject(subjectld,subjectParameters) | lookup all subjects |
| repository(subjectld,repositoryld) | lookup all registered repositories for the subject |
| repositoryId.repositoryDocumentStatus(docId, "new") | lookup all new documents |
| repositoryId.repositoryDocumentTitle (docId, docTitle) | lookup the document title |
| repositoryId.repositoryDocument(docId, docTitle, docContent) | lookup all documents in the repository |
| subscribed(userld,subjectld) | lookup all subscribed users for the subject |
| notificationScheme(userId,subjectId,"interactive choice") II notificationScheme(userId,subjectId, "<deliveryMedium>") | lookup the notification and delivery scheme the user has selected for the subject |
| userEmail(userId,eMailAddress) | lookup the users Email address |
| buildMsg(docId,docTitle,repositoryId,userId,subject Id,subjectName,subject,msg) | build a corresponding notification message |
| e-mail("yaka@xrce.xerox.com", eMailAddress,subject,msg) | send the notification message to the user from Yaka |
| delivery(repositoryld,docld, userId, "<deliveryMedium>") | initiate delivery of the new document through the delivery Medium the user has selected for the subject |
| userPreferences(userId,"<deliveryMedium>", deliveryParameters) | look up the user Preferences for a given delivery medium |
| deliveryMedium.deliverDocument(docTitle, docContent, deliveryParameters) | deliver the document with the given parameters |

User profiles to preselect notification and delivery time and mode

User profiles allow customization of the way awareness is provided to users. They define when and how a subscribed user should be notified about new documents and when and how new documents should be delivered to him. A default user profile might contain a user's default notification and delivery preferences. These preferences can then be adapted to each subscribed subject. The interactive notification and delivery scheme, or the direct notification scheme described above, give examples for user profiles. Other delivery schemes can be easily defined, such as notification only when a certain condition is fulfilled (e.g., 10 new documents have been published for a subject). Filtering Criteria to identify relevant documents

Subjects are associated to a set of document repositories and by default all new documents within these repositories are considered relevant and imply notification and delivery. This might be too unspecific. In order to be able to adapt the notification and delivery process to different user interests, filtering criteria can be used. These filtering criteria are based on a set of document characteristics or attributes, such as the title, author, or summary. A filter is constituted by a set of constraints on these attributes. It can be attached to the initial subject definition. This allows users to subscribe to a "filtered" subject, for example specifying that she/he is not interested in all documents, but only in those containing a certain keyword in their title, or being published by a particular author.

### Automatic Document Transformations before delivery

Sometimes it is not convenient or feasible to deliver a document as-is to the user. This is generally due to limitations of the selected delivery medium. For example, mobile users have no interest in receiving huge documents on their PDA with limited display and storage space. Similarly, it can be inconvenient to send a document in an inappropriate format to a printer. Automatic document transformations, applied before document delivery, palliate this problem. They permit adaptation of the transmitted information to the selected delivery medium. For instance, if the delivery medium has a storage or display limitation, the transformation can consist of summarizing the initial document. Examples of transformation types are shown in Table 2.

**Table 2**

| **Delivery Medium** | **Requested Format (Transformation To)** | **Initial Format (Transformation From)** |
|---|---|---|
| Voice Mail | Voice | Text, ... |
| Printer | PS/PDF | Doc, ... |
| PDA | Abstract | Text, ... |
| Email | Email message | Text, ... |
| Fax | PS | Text, ... |
| Repository | Identity | Text, ... |
| Specific Repository | Translation / Abstract ... | Text |

Differentiated Awareness according to access rights

Sometimes not all users have the same access rights with respect to particular tracked document repositories. Document notification and delivery must conform to these rights. In general, users belong to a hierarchical organization. Their rights and awareness have to be managed accordingly. Access rights can be managed at different levels concerning storage (document, repository, subject), visibility (complete, restricted, or no visibility) and users (membership of groups within the organizational hierarchy).

## Claims

1. A system for notification of documents comprising:
a plurality of document repositories (12), each document repository storing and monitoring a plurality of documents (21);
a subject directory (48) representing at least one subject, wherein documents stored in the plurality of document repositories (12) are associated to at least one subject in the subject directory;
a profile directory (18) representing a plurality of user accounts, wherein each user account subscribes to at least one subject; and
a controller (40) for managing the plurality of document repositories, wherein the controller, responsive to a new document stored in one of the plurality of repositories and being indexed according to the at least one subject, notifies the user accounts having subscribed to the at least one subject of the new document.

2. The system of claim 1, further comprising a document delivery service for delivering documents to the user accounts, wherein the controller (40) transmits a copy of the new document to the user accounts having subscribed to the at least one subject of the new document through the delivery device.

3. The system of claim 2, further comprising a document transformation routine for transforming a document to a format according to a delivery medium through which the document is delivered to the user.

4. The system of any of the preceding claims, further comprising a filtering routine for providing multiple filtering criteria for defining when documents are relevant to subjects.

5. The system of any of the preceding claims, further comprising an access rights controller for controlling when a particular document may be provided to a user account.

6. A method for providing notification of documents, comprising:
providing a plurality of document repositories (12), each document repository storing a plurality of documents;
indexing at least one document in at least one of the plurality of repositories according to at least one predetermined subject matter;
monitoring the documents stored in the plurality of repositories;
providing a profile directory (18) representing a plurality of user accounts, wherein each user account subscribes to at least one subject matter; and
receiving a new document at one of the plurality of repositories (12);
detecting the new document and associating it to at least one predetermined subject matter; and
notifying the user accounts having subscribed to the at least one predetermined subject matter of the new document.

7. The method of claim 6, further comprising:
transmitting a copy of the new document to the user accounts having subscribed to the at least one predetermined subject matter of the new document.

8. The method of claim 6 or claim 7, further comprising:
transforming the new document to a format according to a user account preference prior to transmitting the copy to the user accounts.

9. The method of any of claims 6 to 8, further comprising:
filtering the new documents detected for a given subject in accordance with user defined multiple criteria for determining if the document is relevant to the user.

10. The method of any of claims 6 to 9, further comprising:
determining whether a user account has access rights for receiving a particular document prior to notifying the user account.
